# EUROPEAN PATENT SPECIFICATION

(11) **EP 3 238 541 B1**
(45) Date of publication and mention of the grant of the patent: **15.04.2026**
(21) Application number: 17167838.6
(22) Date of filing: 24.04.2017
(51) Int. Cl.: A01N 59/20, C05D 9/00, C05G 3/60

(54) **PRODUCT FOR DEFENDING AND FEEDING PLANTS AND RESPECTIVE PREPARATION METHOD AND USE**
PRODUKT ZUR VERTEIDIGUNG UND ERNÄHRUNG VON PFLANZEN SOWIE EINE ENTSPRECHENDE HERSTELLUNGSMETHODE UND VERWENDUNG
PRODUIT POUR DÉFENDRE ET NOURRIR DES PLANTES ET MÉTHODE DE PRÉPARATION ET UTILISATION DUDIT PRODUIT

(30) Priority: 27.04.2016 IT UA20162924
(43) Date of publication of application: 01.11.2017
(73) Proprietor: MANICA S.p.A., 38068 Rovereto (Trento) (IT)
(72) Inventor: MALFERRARI, Daniele, 41058 Vignola (MO) (IT); POPPI, Stefano, 40017 San Giovanni in Persiceto (BO) (IT)
(74) Representative: Brunacci, Marco

(56) References cited:
- EP-A1- 2 954 781
- EP-A2- 0 306 035
- LI YA L ET AL: "Stable copper-zeolite filter media for bacteria removal in stormwater", JOURNAL OF HAZARDOUS MATERIALS, vol. 273, 2014, pages 222 - 230, XP028648255, ISSN: 0304-3894, DOI: 10.1016/J.JHAZMAT.2014.03.036

## Description

This invention relates to the formulation of a copper-based product, obtainable from the method of production specified herein, that may be used in an agricultural environment for feeding and defending plants by applying the product to the ground and to the plants themselves, with particular reference to the sectors of arboriculture, for example in orchards and vineyards and specialised horticulture. The invention also relates to a method for preparing the aforesaid copper-based product and to uses of the the product.

Copper is an indispensable element for feeding plants inasmuch as it intervenes and performs an important role in photosynthesis, in respiration, in fixing nitrogen, in synthesis of proteins and in the metabolism of cell walls.

Copper also performs a strong fungistatic and bactericide action; owing to this important property, copper is widely used in the phytopharmaceuticals industry to control important vegetable pathologies.

Copper-based compounds are widely used in agriculture, especially preventively, to combat a wide range of fungi and plant diseases. For example, they have been used for years against grapevine downy mildew, apple scab, against peach leaf curl or olive leaf spot.

In fact, the cupric ion applied to the plants accumulates in the fungus spores and in the bacteria, where it interferes with the respiratory enzymes of the pathogenic agent, modifying the oxidoreductive processes, causing the aspecific denaturing of the protein structures and altering the permeability of the cellular membrane. These action mechanisms have, at least until today, made the appearance of resistant or tolerant pathogenic (fungal or bacterial) strains highly unlikely.

In the prior art, it is known that in applications to vegetation of the various and "historical" copper-salt based formulations, such as, for example, oxychlorides, hydroxides, Bordeaux mixture, to cite the most widely used, to treat plant pathologies arising from microdeficiencies, and the use thereof to combat fungal and bacterial diseases, there is a great reduction in the efficiency thereof owing to the great and inevitable loss of the active principle, i.e. of the cupric ion Cu²⁺. This is because of the very poor persistence of the (residual, post-treatment) ion on the plants, also because of the only effect of ambient humidity or brief precipitation.

This poor persistence requires very frequent treatment, which can cause very serious environmental and ecotoxicological risks over a wide range of organisms and microorganisms, due to the accumulation of copper in the soil.

In fact, it has been found that the continuous use of copper salts as phytopharmaceuticals has led to toxic accumulations of copper in the soil of areas subject to agricultural activities, with concentrations from 100 to 1280 mg/kg, as opposed to values of 5-20 mg/kg in areas not subject to agricultural activities.

In order to reduce the risk of copper accumulation in the soil, formulations have been proposed, which are generically known as "Complexed Copper" containing, for example, copper tribasic sulphate, copper tallate, copper chelates, copper phosphites, etc, which have been designed to offer a solution of the problem of high dosages and residues. These products of the latest generation, have enabled on the one hand the metal content to be reduced, but, on the other hand, have the defect that, owing to the action mechanism thereof (cytotropic and locosystemic), frequently cause accentuated phytotoxicity in plants treated and a residue of copper in the vegetable tissues that will be present in the products intended for food and drink consumption (e.g. wine, fruit, vegetables), with consequent health risks for consumers.

In DE102005059757, the use of at least one natural zeolite or of natural or artificial compound that are similar to the zeolites is disclosed, to combat fungal infections. However, the action mechanism of the zeolites or of the compounds similar to zeolites is not disclosed.

EP0306035 discloses a fungicide composition for agriculture or horticulture that comprises as an active ingredient at least one crystalline zeolite selected from a group consisting of faujasite, chabazite and phillipsite. The fungicide composition can contain synthetic additives that can cause environmental pollution.

EP2954781 discloses in a confused manner a method for protecting plants against parasites and diseases, which provides for the use of a zeolite-based compound (clinoptilolite) and other minerals.

In the compositions and preparations disclosed in the documents quoted above, together with the zeolites, synthetic additives are used that in fact limit the use thereof in many biological environments. The methods of preparation are different from those envisaged for the product of the present invention, which are disclosed below. Further, using complex mixtures of minerals, each with a different action, is not envisaged and neither the manner of action or application in the countryside of the compositions and preparations disclosed is illustrated.

One object of the present invention is to provide a copper-based product for feeding and defending plants that enables the dwell time of the active residue of the cupric ion on the treated vegetation to be increased significantly, so as to be able to reduce significantly the overall quantity of copper used in plant treatments. The product must also be such as not be able to cause phytotoxicity in treated vegetation and not leave significant residues in the vegetation.

Another object of the present invention is to provide a product that does not contain synthetic additives as co-formulants.

The objects of the invention are achieved with a product according to claim 5, obtainable from the method of claim 1 and with the uses according to claims 9-10.

Owing to the invention, it is possible to reduce the number and frequency of treatments on the plants and on the soil because the product according to the invention ensures persistence of the copper on the plants treated that is greater than that of prior-art products. This results in a real reduction of the risk of environmental pollution due to the accumulation of copper in the soil.

Further, the action mechanism of the product according to the invention ensures that there is no risk of phytotoxicity and accumulation of copper in the treated plants.

Further advantages and features of the invention are shown by the following description and by the attached drawings, in which:
Figure 1 is a photograph of the surface of a Vitovska vine leaf observed under an electronic scanning microscope, magnified 600x, onto which the product according to the invention has been distributed with an atomiser;
Figure 2 is a photograph of the surface of the leaf of Figure 1, observed under an electronic scanning microscope magnified 2197x;
Figure 3 is a photograph of the surface of the leaf of Figures 1 and 2, observed under an electronic scanning microscope magnified 5000x;
Figure 4 and Figure 5 illustrate, in the form of tables, the methods of treatment of a vineyard of Montuni vines, with a prior-art product and with a product according to the invention;
Figure 6 illustrates in the form of graphs the pattern of persistence of the copper on the leaves of plants treated with the product according to the invention.

The product according to the invention comprises a co-formulant and an active principle.

The co-formulant consists of a mixture of natural mineral substances chosen from a group consisting of calcite, cristobalite, muscovite/illite, magnesium pyroxene, plagioclase, quartz, sanidine, zeolite chabasite, zeolite phillipsite, zeolite clinoptilolite.

In particular, the co-formulant can have the following formulation, in which the quantities of the single natural mineral substances that make up the co-formulant are expressed as percentages in weight:

| | |
|---|---|
| plagioclase | 5 to 15 % |
| sanidine | 5 to 15 % |
| zeolite chabasite | 15 to 35 % |
| zeolite phillipsite | 25 to 45 %. |

The co-formulant can further contain the following components according to the weight percentages set out below:

| | |
|---|---|
| calcite | up to 5 % |
| cristobalite | up to 5 % |
| muscovite/illite | up to 5 % |
| magnesium pyroxene | up to 5 % |
| quartz | up to 5% |
| zeolite clinoptilolite | up to 20 % |

The chemical composition of the co-formulant, depending on the mineral substances that make up the co-formulant and the percentages thereof, is indicated below, with percentages expressed by weight:

| | |
|---|---|
| SiO₂ | from 45 to 55 % |
| Al₂O₃ | from 10 to 20 % |
| Fe₂O₃ | from 0 to 5 % |
| TiO₂ | from 0 to 0.5 % |
| P₂O₅ | from 0 to 0.25 % |
| MnO | from 0 to 0.25 % |
| MgO | from 0 to 5 |
| CaO | from 0 to 10 |
| Na₂O | from 0 to 10 |
| K₂O | from 0 to 10 |
| H₂O/CO₂ | from 10 to 20 |

### Other elements <0.005

In order to obtain the product according to the invention, to the co-formulant composed as indicated above, a quantity of copper sulphate and of copper hydroxide is added in percentages that are variable between 20 and 30% in weight, for copper sulphate and between 0.01 and 0.1%, for copper hydroxide. Accordingly, the final copper content (expressed as a metal) in the product can vary from 5 to 10% in weight.

The product according to the invention is prepared according to a method of preparation as disclosed below, that comprises the following four steps:

### First step:

Preparing a water suspension containing, in the weight proportions indicated above, the co-formulant, copper sulphate and copper hydroxide. The suspension is prepared directly inside an agitating and milling system, for example a ball mill.

### Second step

Agitation of the water suspension and simultaneous milling of the minerals that make up the co-formulant for a time that varies between 24 and 36 hours. During this time, the copper salts are solubilised, above all the copper sulphate, whereas the copper hydroxide, having low solubility, will mostly remain in the same chemical form. A cationic exchange then occurs between copper in a solution like Cu²⁺ and the zeolite component of the co-formulant: about 65% of the copper in solution is absorbed by the zeolites, which release calcium and potassium. At the end of the process, the granulometry of the minerals, i.e. of the solid substances in the water suspension, must not be greater than 30 micron.

### Third step

Drying and simultaneous atomisation (production of microaggregates of powder) of the product. The (atomised) powder will contain copper in different chemical forms, i.e. the copper absorbed by the three zeolites, with different release kinetics, copper hydroxide (initial and through chemical reprecipitation) and reprecipitated copper sulphate following the removal of the water in drying. The sulphate anion, at the moment of thermal removal of water, not only reprecipitates like copper sulphate but also forms calcium and potassium sulphate, elements that are released to the solution by the zeolites following the cationic exchange reaction.

### Fourth step

Chemical/physical rebalancing of the product at ambient conditions and subsequent bagging of the atomised material in big-bags or in bags with a variable volume. The product is thus ready for use and can be dispersed in variable volumes of water according to the dispersion equipment (atomisers) at the disposal of the farmers.

The main innovative aspect of the product according to the present invention relates to the possibility of using a slow-release copper-based product, i.e. a product that is not washed away rapidly, above all because of the presence of rain and/or a high degree of humidity. This is possible owing to the presence in the co-formulant of the zeolites, minerals that possess cavities and channels with volumes up to 50% of the crystal and which can "host" cations coming "from the exterior" of the mineral by cationic exchange interaction that develops at the interface between the mineral and water solution containing the cations.

Once copper is absorbed by the zeolite it is no longer hydrosoluble, as, for example, when it is applied as a copper sulphate or other soluble salt, but becomes "interchangeable". This means that it can be released only as a result of the reactions that occur naturally at the interface between the exchanged mineral and the soil/vegetable surface (just a few micrograms of metal suffice as a nutrient or to contrast pathologies). The use of a mixture of different zeolites enables the release modes to be differentiated further. A further differentiation of release time is provided by the use of different copper salts (as provided by rules in force) that are used to prepare the product and which persist only partially in the initial shape, i.e. the copper remains linked to the anion and is not exchanged.

The product according to the invention can be used in various modes, for example:
- for applications with spraying of the plants to be treated, using from a minimum of 3 kg to a maximum of 5 kg per hectare,
- for applications with fertigation on the soil on which plant to be treated grow, or for localized applications, using a minimum of 10 kg per hectare to a maximum of 30 kg per hectare.

In both cases, the quantity of water in which to disperse the product is not relevant and depends on the type of equipment used.

The product according to the invention has numerous advantages compared with known commercially available copper-based products.

In fact, by using the product according to the invention it is possible to reduce drastically the quantity of copper for each treatment. This is because the co-formulant with which most of the copper is bound has great persistence over time on the leaves and the copper bound with the mineral is released slowly, although the presence of "quick-acting free" copper- the copper that is not absorbed by the zeolites - is not missing - in the event of the need to intervene rapidly, for example to combat pathologies like downy mildew. The presence of copper bound with the three zeolites and of copper in other chemical forms confers on the product different release kinetics. Further, the great adhesion of the minerals, in the case of leaf treatment, eliminates almost completely washing away and dispersal in the soil encountered by products currently on the market.

Owing to the highly innovative formulation of the product according to the present invention it is thus possible to reduce drastically the amount of Cu²⁺ per hectare, maintaining unaltered the feeding and defending properties thereof.

Different experimental work in the field with the product according to the present invention confirm that it is possible, for the same final result, to use very limited quantities of copper for every single treatment, i.e. from 100 to 350 g/ha, arriving at a reduction of 60-80% compared with the quantities used in the different farm protocols using prior-art products. The perfect balance between different copper compounds in the product according to the present invention in fact enables the amount of copper to be reduced whilst maintaining high levels of effectiveness.

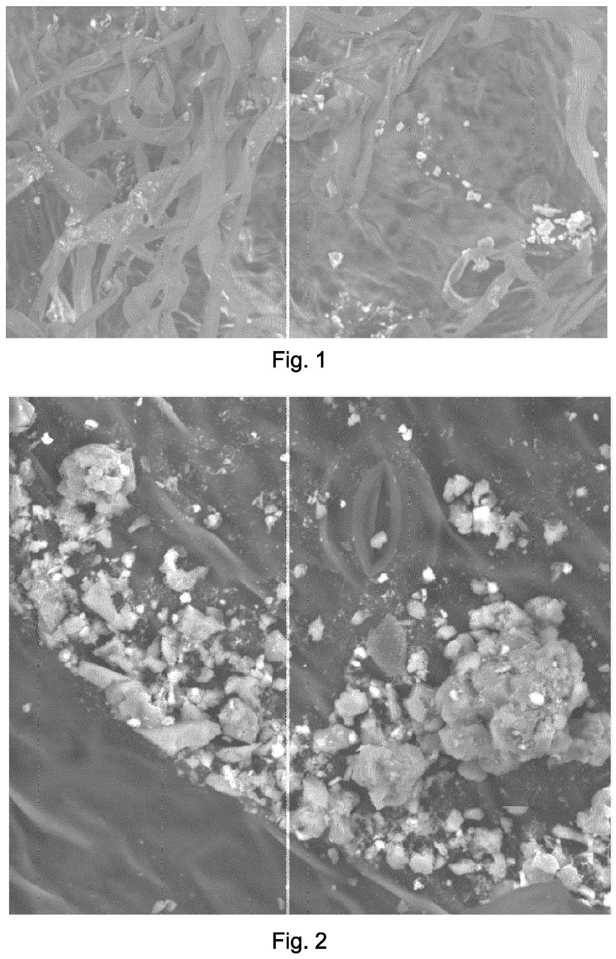

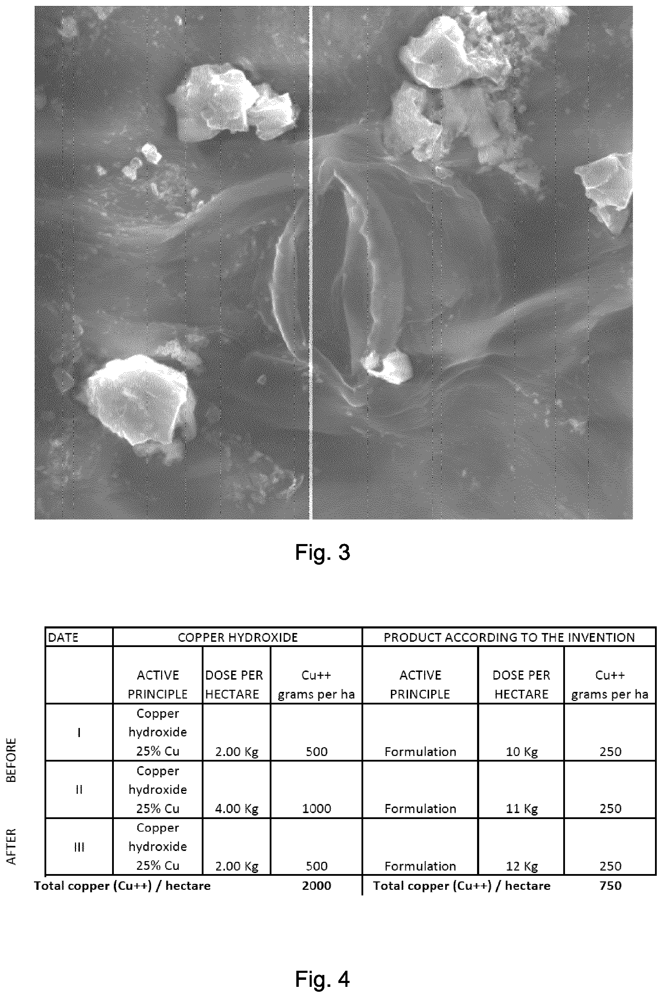

By way of example, in Figures 1 to 3, some images are shown, taken by a scanning electronic microscope, with different degrees of magnification, which show the modes of adhesion of the product according to the invention to leaves of the Vitovska vine, the product according to the invention is visible in the form of blotches of white or light grey colour. In Figure 4 a table is reproduced that illustrates the field treatment protocol in a vineyard of Montuni vines, with copper hydroxide and with the product according to the invention. The protocol comprises three successive treatments, indicated by the numbers I, II and III, with the quantities of copper hydroxide and product according to the invention indicated in the table. Treatment II was administered seventeen days after treatment I and treatment III was administered 21 days after treatment II.

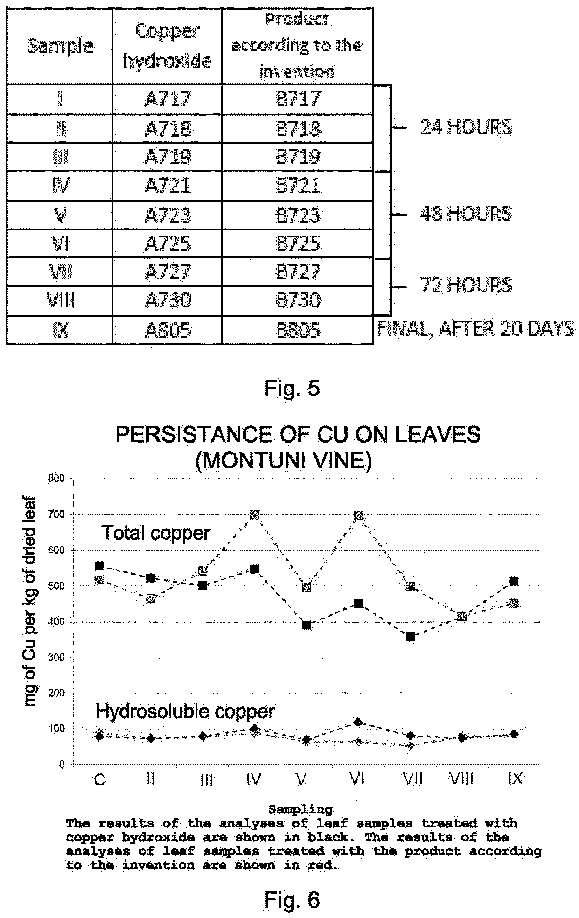

After treatments I and II and before treatment III samples were taken from vine leaves treated with copper hydroxide and from vines treated with the product according to the invention. These samples have been indicated in the table of Figure 5 by the numbers I, II, III, IV, V, VI, VII, VIII and IX, respectively. The samples I, II and II were taken at intervals of 24 hours from one another starting from the day after treatment II. Samples IV, V and VI were taken at intervals of 48 hours from one another, sample IV was taken 48 hours after sample III. Samples VII and VIII, were taken at intervals of 72 hours from one another, sample VII being taken 72 hours after sample VI. Sample IX, i.e. the last sample, was taken twenty days after treatment II.

The sample leaves were analysed for persistence of the copper on the leaves, both in hydrosoluble form (extraction in water) and total persistence (extraction in acid), during treatment. In Figure 6, two graphs are reproduced that illustrate the pattern of persistence of the copper on the sampled leaves. These graphs show that in the cultivated parts treated with the product according to the invention, although a significantly lower quantity of copper (-70%) was applied, the persistence of copper on the leaves does not change with respect to treatment with copper hydroxide. It is important to point out that all this has a significant and positive environmental impact without affecting the production quality and quantity.

Further advantages of the product according to the invention, detected experimentally, are indicated below:
- it has a thermoprotective action because of the presence of femic minerals (magnesium pyroxene) that are able to absorb heat;
- it has an antistress action because of the shielding from ultraviolet and infrared rays because of the presence of sialic minerals (muscovite/illite, quartz, cristobalite) with great radiation-absorbing capacity;
- it is able to release microdoses of potassium through the cationic exchange operated by the zeolites during preparation and because of the presence of illite/muscovite and sanidine;
- it is able to control the pH because of the presence of calcite and plagioclase;
- it combats the proliferation of grape moth (grapevine parasite) through a physicalmechanical protective action with the effect of hampering egg-laying; this is possible because of the presence of not only zeolites, but also quartz and cristobalite, which are minerals that have sharp corners even after milling (second preparation step);
- it is able to perform an action controlling surface humidity owing to the presence of the zeolites, thus contrasting the proliferation of botrytis;
- it has a strong bactericide and fungicide action;
- in comparison with the prior-art products that are already commercially available it does not produce symptoms of phytotoxicity, it does not have a stressogenic effect on vegetable tissues that block plant development;
- owing to the intrinsic properties of the co-formulant consisting of a mixture of natural minerals, the product according to the invention has demonstrated that it possesses great adhesive properties and great persistence once it is distributed over vegetation treated for the proposed purposes (nutrition and defence); having made greater persistence of the copper ion on the treated vegetation possible creates undoubted advantages from both the financial and environmental point of view;
- the copper ion in the product according to the invention performs its fungistatic and bacteriostatic actions by mostly remaining on the surface of the treated organs (leaves, flowers, fruits, buds) because it is subject to limited lymphatic system phenomena (entry into the vegetable tissues and into the lymphatic paths), thus it does not increase, even minimally, the normal presence of (natural) copper in vegetable organisms that goes from a minimum of 1 to a maximum of 40 mg/kg. This property of the product according to the invention provides a greater guarantee of food health and safety compared with known products that affect the residual level of metal copper in foodstuffs.

## Claims

1. Method for preparing a product for defending and feeding plants, **characterized in that** it comprises the following steps:
- preparing a water suspension containing, the co-formulant, copper sulphate and copper hydroxide;
- agitation of the water suspension and simultaneous milling of the minerals that make up the co-formulant for a time variable between 24 and 36 hours until reaching granulometry of the solid substances in the water suspension that is not greater than 30 micron;
- drying and simultaneous atomising of the product;
- chemical/physical rebalancing of the product to environmental conditions and subsequent packaging of the product;
wherein the co-formulant consists of a mixture of natural mineral substances chosen from a group consisting of calcite, cristobalite, muscovite/illite, magnesium pyroxene, plagioclase, quartz, sanidine, zeolite chabasite, zeolite phillipsite, zeolite clinoptilolite, and the active principle comprises copper sulphate and copper hydroxide;
wherein said mixture of natural mineral substances comprises at least:
| | |
|---|---|
| plagioclase | from 5 to 15% in weight |
| sanidine | from 5 to 15% in weight |
| zeolite chabasite | from 15 to 35% in weight |
| zeolite phillipsite | from 25 to 45% in weight. |

2. Method according to claim 1, **characterized in that** said mixture of natural mineral substances comprises:
| | |
|---|---|
| calcite | up to 5% in weight |
| cristobalite | up to 5% in weight |
| muscovite/illite | up to 5% in weight |
| magnesium pyroxene | up to 5% in weight |
| quartz | up to 5% in weight |
| zeolite clinoptilolite | up to 20 % in weight. |

3. Method according to claim 1 or 2, **characterized in that** said active principle comprises a quantity of copper sulphate comprised between 20% and 30% of the total weight of the product.

4. Method according to any one of claims 1 to 3, **characterized in that** said active principle comprises a quantity of copper hydroxide comprised between 0.01% and 0.1 % of the total weight of the product.

5. Product for defending and feeding plants obtainable from the method of claims 1-4, comprising a co-formulant and an active principle, **characterized in that** the co-formulant consists of a mixture of natural mineral substances chosen from a group consisting of calcite, cristobalite, muscovite/illite, magnesium pyroxene, plagioclase, quartz, sanidine, zeolite chabasite, zeolite phillipsite, zeolite clinoptilolite, and the active principle comprises copper sulphate and copper hydroxide;
wherein said mixture of natural mineral substances comprises at least:
| | |
|---|---|
| plagioclase | from 5 to 15% in weight |
| sanidine | from 5 to 15% in weight |
| zeolite chabasite | from 15 to 35% in weight |
| zeolite phillipsite | from 25 to 45% in weight. |

6. Product according to claim 5, **characterized in that** said mixture of natural mineral substances comprises:
| | |
|---|---|
| calcite | up to 5% in weight |
| cristobalite | up to 5% in weight |
| muscovite/illite | up to 5% in weight |
| magnesium pyroxene | up to 5% in weight |
| quartz | up to 5% in weight |
| zeolite clinoptilolite | up to 20 % in weight. |

7. Product according to claims 5 or 6, **characterized in that** said active principle comprises a quantity of copper sulphate comprised between 20% and 30% of the total weight of the product.

8. Product according to claims 5-7, **characterized in that** said active principle comprises a quantity of copper hydroxide comprised between 0.01% and 0.1 % of the total weight of the product.

9. Use of a product for defending and feeding plants according to any one of claims 5 to 8, **characterized in that** it comprises applying the product by sprinkling on plants to be treated, using from a minimum of 3 kg to a maximum of 5 kg per hectare.

10. Use of a product for defending and feeding plants according to any one of claims 5 to 8, **characterized in that** it comprises applying the product by fertigation, or localized applications, on the soil on which plants to be treated grow, using from a minimum of 10 kg per hectare to a maximum of 30 kg per hectare.

## Patentansprüche

1. Verfahren zur Herstellung eines Produkts zum Schutz und zur Düngung von Pflanzen, **dadurch gekennzeichnet, dass** es die folgenden Schritte umfasst:
- Herstellen einer Wassersuspension, die den Formulierungshilfsstoff, Kupfersulfat und Kupferhydroxid enthält;
- Rühren der Wassersuspension und gleichzeitiges Mahlen der Mineralien, aus denen der Formulierungshilfsstoff besteht, für eine Zeit zwischen 24 und 36 Stunden bis eine Korngröße der festen Stoffe in der Wassersuspension von nicht mehr als 30 Mikrometern erreicht ist;
- Trocknen und gleichzeitiges Zerstäuben des Produkts;
- chemisches/ physikalisches Konditionieren und Anpassen des Produkts an die Umgebungsbedingungen und anschließendes Verpacken des Produkts;
wobei der Formulierungshilfsstoff aus einer Mischung natürlicher mineralischer Stoffe besteht, die aus einer Gruppe ausgewählt sind, die aus Calcit, Cristobalit, Muskovit/Illit, Magnesiumpyroxen, Plagioklas, Quarz, Sanidin, Zeolith Chabasit, Zeolith Phillipsit, Zeolith Klinoptilolith besteht, und der Wirkstoff Kupfersulfat und Kupferhydroxid umfasst;
wobei die Mischung aus natürlichen mineralischen Stoffen mindestens umfasst:
| | |
|---|---|
| Plagioklas | 5 bis 15 Gew.-% |
| Sanidin | 5 bis 15 Gew.-% |
| Zeolith Chabasit | 15 bis 35 Gew.-% |
| Zeolith Phillipsit | 25 bis 45 Gew.-%. |

2. Verfahren nach Anspruch 1, **dadurch gekennzeichnet, dass** die Mischung aus natürlichen mineralischen Stoffen umfasst:
| | |
|---|---|
| Calcit | bis zu 5 Gew.-% |
| Cristobalit | bis zu 5 Gew.-% |
| Muskovit/Illit | bis zu 5 Gew.-% |
| Magnesiumpyroxen | bis zu 5 Gew.-% |
| Quarz | bis zu 5 Gew.-% |
| Zeolith Klinoptilolith | bis zu 20 Gew.-%. |

3. Verfahren nach Anspruch 1 oder 2, **dadurch gekennzeichnet, dass** der Wirkstoff eine Menge an Kupfersulfat umfasst, die zwischen 20 % und 30 % des Gesamtgewichts des Produkts liegt.

4. Verfahren nach einem der Ansprüche 1 bis 3, **dadurch gekennzeichnet, dass** der Wirkstoff eine Menge an Kupferhydroxid umfasst, die zwischen 0,01 % und 0,1 % des Gesamtgewichts des Produkts liegt.

5. Produkt zum Schutz und zur Düngung von Pflanzen, erhältlich durch das Verfahren nach den Ansprüchen 1 bis 4, umfassend einen Formulierungshilfsstoff und einen Wirkstoff, **dadurch gekennzeichnet, dass** der Formulierungshilfsstoff aus einer Mischung natürlicher mineralischer Stoffe besteht, die aus einer Gruppe ausgewählt sind, die aus Calcit, Cristobalit, Muskovit/Illit, Magnesiumpyroxen, Plagioklas, Quarz, Sanidin, Zeolith Chabasit, Zeolith Phillipsit, Zeolith Klinoptilolith, besteht und der Wirkstoff Kupfersulfat und Kupferhydroxid umfasst;
wobei die Mischung natürlicher mineralischer Substanzen mindestens umfasst:
| | |
|---|---|
| Plagioklas | von 5 bis 15 Gew.-% |
| Sanidin | von 5 bis 15 Gew.-% |
| Zeolith Chabasit | von 15 bis 35 Gew.-% |
| Zeolith Phillipsit | von 25 bis 45 Gew.-%. |

6. Produkt nach Anspruch 5, **dadurch gekennzeichnet, dass** die Mischung natürlicher mineralischer Stoffe umfasst:
| | |
|---|---|
| Calcit | bis zu 5 Gew.-% |
| Cristobalit | bis zu 5 Gew.-% |
| Muskovit/Illit | bis zu 5 Gew.-% |
| Magnesiumpyroxen | bis zu 5 Gew.-% |
| Quarz | bis zu 5 Gew.-% |
| Zeolith Klinoptilolith | bis zu 20 Gew.-%. |

7. Produkt nach Anspruch 5 oder 6, **dadurch gekennzeichnet, dass** der Wirkstoff eine Menge an Kupfersulfat umfasst, die zwischen 20 % und 30 % des Gesamtgewichts des Produkts liegt.

8. Produkt nach Anspruch 5-7, **dadurch gekennzeichnet, dass** der Wirkstoff eine Menge an Kupferhydroxid umfasst, die zwischen 0,01 % und 0,1 % des Gesamtgewichts des Produkts liegt.

9. Verwendung eines Produkts zum Schutz und zur Düngung von Pflanzen nach einem der Ansprüche 5 bis 8, **dadurch gekennzeichnet, dass** sie ein Ausbringen des Produkts durch Besprühen der zu behandelnden Pflanzen mit einer Menge von mindestens 3 kg bis maximal 5 kg pro Hektar umfasst.

10. Verwendung eines Produkts zum Schutz und zur Ernährung von Pflanzen nach einem der Ansprüche 5 bis 8, **dadurch gekennzeichnet, dass** es ein Ausbringen des Produkts durch Fertigation oder lokale Anwendungen auf den Boden, auf dem die zu behandelnden Pflanzen wachsen, mit einer Menge von mindestens 10 kg pro Hektar bis maximal 30 kg pro Hektar umfasst.

## Revendications

1. - Procédé de préparation d'un produit pour défendre et nourrir les plantes, **caractérisé par le fait qu'**il comprend les étapes suivantes :
- préparation d'une suspension aqueuse contenant le co-formulant, du sulfate de cuivre et de l'hydroxyde de cuivre ;
- agitation de la suspension aqueuse et broyage simultané des minéraux qui composent le co-formulant pendant une durée variable entre 24 et 36 heures jusqu'à atteindre une granulométrie des substances solides dans la suspension aqueuse qui ne soit pas supérieure à 30 microns ;
- séchage et atomisation simultanée du produit ;
- rééquilibrage chimique/physique du produit aux conditions environnementales et conditionnement ultérieur du produit ;
dans lequel le co-formulant consiste en un mélange de substances minérales naturelles choisies dans un groupe consistant en la calcite, la cristobalite, la muscovite/illite, le pyroxène magnésien, le plagioclase, le quartz, la sanidine, la zéolite chabasite, la zéolite phillipsite, la zéolite clinoptilolite, et le principe actif comprend le sulfate de cuivre et l'hydroxyde de cuivre ;
dans lequel ledit mélange de substances minérales naturelles comprend au moins :
| | |
|---|---|
| plagioclase | de 5 à 15 % en poids |
| sanidine | de 5 à 15 % en poids |
| zéolithe chabasite | de 15 à 35% en poids |
| zéolithe phillipsite | de 25 à 45% en poids. |

2. - Procédé selon la revendication 1, **caractérisé par le fait que** ledit mélange de substances minérales naturelles comprend :
| | |
|---|---|
| calcite | jusqu'à 5% en poids |
| cristobalite | jusqu'à 5 % en poids |
| muscovite/illite | jusqu'à 5 % en poids |
| pyroxène magnésien | jusqu'à 5 % en poids |
| quartz | jusqu'à 5 % en poids |
| zéolithe clinoptilolite | jusqu'à 20 % en poids. |

3. - Procédé selon la revendication 1 ou 2, **caractérisé par le fait que** ledit principe actif comprend une quantité de sulfate de cuivre comprise entre 20 % et 30 % du poids total du produit.

4. - Procédé selon l'une quelconque des revendications 1 à 3, **caractérisé par le fait que** ledit principe actif comprend une quantité d'hydroxyde de cuivre comprise entre 0,01 % et 0,1 % du poids total du produit.

5. - Produit pour défendre et nourrir les plantes pouvant être obtenu par le procédé des revendications 1 à 4, comprenant un co-formulant et un principe actif, **caractérisé par le fait que** le co-formulant consiste en un mélange de substances minérales naturelles choisies dans un groupe consistant en la calcite, la cristobalite, la muscovite/illite, le pyroxène magnésien, le plagioclase, le quartz, la sanidine, la zéolite chabasite, la zéolite phillipsite, la zéolite clinoptilolite, et **par le fait que** le principe actif comprend le sulfate de cuivre et l'hydroxyde de cuivre ;
dans lequel ledit mélange de substances minérales naturelles comprend au moins :
| | |
|---|---|
| plagioclase | de 5 à 15 % en poids |
| sanidine | de 5 à 15 % en poids |
| zéolithe chabasite | de 15 à 35% en poids |
| zéolithe phillipsite | de 25 à 45% en poids. |

6. - Produit selon la revendication 5, **caractérisé par le fait que** ledit mélange de substances minérales naturelles comprend :
| | |
|---|---|
| calcite | jusqu'à 5% en poids |
| cristobalite | jusqu'à 5 % en poids |
| muscovite/illite | jusqu'à 5 % en poids |
| pyroxène magnésien | jusqu'à 5 % en poids |
| quartz | jusqu'à 5 % en poids |
| zéolithe clinoptilolite | jusqu'à 20 % en poids. |

7. - Produit selon la revendication 5 ou 6, **caractérisé par le fait que** ledit principe actif comprend une quantité de sulfate de cuivre comprise entre 20% et 30% du poids total du produit.

8. - Produit selon les revendications 5 à 7, **caractérisé par le fait que** ledit principe actif comprend une quantité d'hydroxyde de cuivre comprise entre 0,01 % et 0,1 % du poids total du produit.

9. - Utilisation d'un produit pour défendre et nourrir les plantes selon l'une quelconque des revendications 5 à 8, **caractérisée par le fait qu'**elle comprend l'application du produit par aspersion sur les plantes à traiter, à raison d'un minimum de 3 kg à un maximum de 5 kg par hectare.

10. - Utilisation d'un produit pour défendre et nourrir les plantes selon l'une quelconque des revendications 5 à 8, **caractérisée par le fait qu'**elle comprend l'application du produit par fertigation, ou applications localisées, sur le sol sur lequel poussent les plantes à traiter, à raison d'un minimum de 10 kg par hectare à un maximum de 30 kg par hectare.
